Europäisches Patentamt

European Patent Office

Office européen des brevets

(19)

(11) **EP 1 240 447 B1**

(12) **EUROPÄISCHE PATENTSCHRIFT**

(45) Veröffentlichungstag und Bekanntmachung des Hinweises auf die Patenterteilung:
**25.06.2003  Patentblatt 2003/26**

(51) Int Cl.⁷: **F16H 61/02**
// F16H59:20

(21) Anmeldenummer: 00981369.2

(22) Anmeldetag: **13.12.2000**

(86) Internationale Anmeldenummer:
**PCT/EP00/12637**

(87) Internationale Veröffentlichungsnummer:
**WO 01/046606 (28.06.2001 Gazette 2001/26)**

(54) **KICK-DOWN-SCHALTDREHZAHLOPTIMIERUNG FÜR EIN AUTOMATGETRIEBE EINES KRAFTFAHRZEUGS**

KICK-DOWN SWITCHING SPEED OPTIMIZATION FOR AN AUTOMATIC TRANSMISSION OF A MOTOR VEHICLE

OPTIMISATION DU REGIME DE PASSAGE KICK-DOWN DE LA BOITE AUTOMATIQUE D'UN VEHICULE

(84) Benannte Vertragsstaaten:
**DE FR**

(30) Priorität: **22.12.1999  DE 19961979**

(43) Veröffentlichungstag der Anmeldung:
**18.09.2002  Patentblatt 2002/38**

(73) Patentinhaber: **ZF FRIEDRICHSHAFEN Aktiengesellschaft**
**88038 Friedrichshafen (DE)**

(72) Erfinder:
• **HENNEKEN, Markus**
**88079 Kressbronn (DE)**
• **JAUCH, Friedemann**
**88074 Meckenbeuren (DE)**
• **HERBSTER, Kai-Uwe**
**88046 Friedrichshafen (DE)**
• **SCHULER, Franz-Josef**
**88079 Kressbronn (DE)**
• **MAUZ, Thomas**
**88085 Langenargen (DE)**

(56) Entgegenhaltungen:
**DE-A- 2 709 235        DE-A- 3 139 838**
**US-A- 5 157 991**

**Beschreibung**

Die Erfindung betrifft ein Verfahren zur Kick-down-Schaltdrehzahloptimierung für ein Kraftfahrzeug mit einem Automatgetriebe gemäß dem Oberbegriff des Anspruchs 1.

Für den Gangwechsel in einem Automatgetriebe wird eine gewisse Verzögerungszeit berücksichtigt, bis die Schaltung vollzogen wird. Hierbei steigt bis zur Lastübernahme von der abschaltenden zur zuschaltenden Kupplung die Motordrehzahl an. Gründe für die Verzögerungszeit sind Kupplungs-Befüllungszeiten und Rampenzeiten bis der für die Schaltung notwendige Schaltdruck aufgebaut wird.

Bei stark motorisierten Fahrzeugen kann die hierbei auftretende Motordrehzahldifferenz unter Berücksichtigung von Kupplungs-Befüllungszeiten inklusive Lastübernahme bis ca. 1 200 1/min betragen.

Die maximal erreichbare Motordrehzahl bei Kick-down-Hochschaltungen kann folglich unterschiedliche Werte annehmen, wobei sich der Fahrzeug-Beladungszustand und die Fahrbahnneigung auf deren Höhe auswirken.

Es zeigt sich das Problem, daß bei einem unbeladenen Fahrzeug bergab die Kick-down(KD-)-Hochschaltungen im Bereich des Motordrehzahl-Abreglers, d. h. der maximal zulässigen Motordrehzahl erfolgen. Der Grund dafür liegt in dem negativen Fahrwiderstand, durch den das Fahrzeug zusätzlich beschleunigt wird.

In diesem Fall müßte die Kick-down-Hochschaltung früher, also bei geringerer Abtriebsdrehzahl erfolgen und abgestimmt werden. Im beladenen Zustand bei Bergauffahrt ergibt sich hingegen als Folge eine tiefere KD-Schaltdrehzahl.

Folglich lässt sich der optimale Zustand, nämlich gleiche KD-Schaltdrehzahlen bei jeder Kick-down-Hochschaltung nicht realisieren.

Nach dem Stand der Technik werden Kick-down-Schaltungen beim Überschreiten vorgegebener Abtriebsdrehzahlen ausgelöst. Diese Abtriebsdrehzahlschwellen können in Schaltprogrammen enthalten sein oder als diskrete Parameter definiert sein.

Aus der DE 31 39 838 A1 beispielsweise ist auch ein Verfahren zur Steuerung von Kick-down-Hochschaltungen bekannt, bei dem der Kick-down-Hochschaltpunkt differenziert ausgelöst wird in Abhängigkeit vom Erreichen verschiedener Betriebsparameter, insbesondere der Motorlast, der Fahrpedalstellung oder der Fahrpedalgeschwindigkeit.

Der vorliegenden Erfindung liegt daher die Aufgabe zugrunde, ausgehend von dem erwähnten Stand der Technik, ein Verfahren zur Kick-down-Schaltdrehzahloptimierung für ein Kraftfahrzeug mit einem Automatgetriebe anzugeben, derart, dass bei Kick-down-Hochschaltungen ein Überschreiten der maximal zulässigen Motordrehzahl verhindert wird. Zudem soll ein verfrühtes Hochschalten verhindert werden.

Diese Aufgabe ist gemäß der Erfindung durch die Merkmale des Patentanspruchs 1 gelöst. Weitere Ausgestaltungen der Erfindung gehen aus den Unteransprüchen hervor.

Demnach wird vorgeschlagen, den Kick-down-Hochschaltpunkt adaptiv, d. h. in Abhängigkeit von den jeweiligen Belastungszuständen und Fahrbahnneigungen zu bestimmen, so dass bei einer gewünschten maximalen Motordrehzahl geschaltet wird.

Erfindungsgemäß wird bei Erkennen eines Kick-down-Zustandes durch die Getriebesteuerung, auf den aktuellen Hochschaltpunkt ein Drehzahloffset nd_abkd addiert. Dieser Drehzahloffset ist vorzeichenbehaftet und wird in Form einer Kennlinie in der Getriebesteuerung abgelegt, wobei für jede Hochschaltung eine separate Kennlinie abgelegt wird.

Gemäß einer Variante der vorliegenden Erfindung werden nach Erkennung eines Kick-down-Zustandes, der Zielgang der nächsten Hochschaltung sowie der Getriebeabtriebsdrehzahlgradient ermittelt.

Anschliessend wird der Drehzahloffset nd_abkd berechnet. Zu diesem Zweck werden die Verzögerungszeiten für die einzelnen Schaltungen applizierbar abgespeichert.

Im Rahmen einer vorteilhaften Variante wird der Wert vom Drehzahloffset in Form einer Kennlinie nach den beiden obigen Verfahren ermittelt und anschliessend in Abhängigkeit von der Fahreraktivität (z. B. mittels eines Bewertungszählers) neu berechnet, so dass n_abkd in einer KD-Hochschaltung für einen sportlichen Fahrer höher liegt; als bei einem ökonomischen Fahrer.

Gemäß dieser Variante wird die Kennlinie in Abhängigkeit von Gangwechsel und Abtriebsdrehzahlgradient mit einem die Fahreraktivität kennzeichnenden Faktor multipliziert. Hierbei liefert die Kennlinie immer positive Werte. Alternativ werden für verschiedene charakteristische Fahreraktivitäten unterschiedliche Kennlinien festgelegt (weiterhin in Abhängigkeit von Gangwechsel und Abtriebsdrehzahlgradient). Durch Mitteln zwischen den Fahrertypen können dann Zwischenfahrertypen berücksichtigt werden.

Die Erfindung ist im folgenden anhand der Zeichnung näher erläutert.

In dieser stellen dar:

Fig. 1     ein Zeit-Motordrehzahl-(n_mot-t-)Diagramm, welches die der Erfindung zugrunde liegende Problematik veranschaulicht und

Fig. 2     eine Darstellung des Drehzahloffsets in Abhängigkeit vom Abtriebsdrehzahlgradienten gemäß der Erfindung.

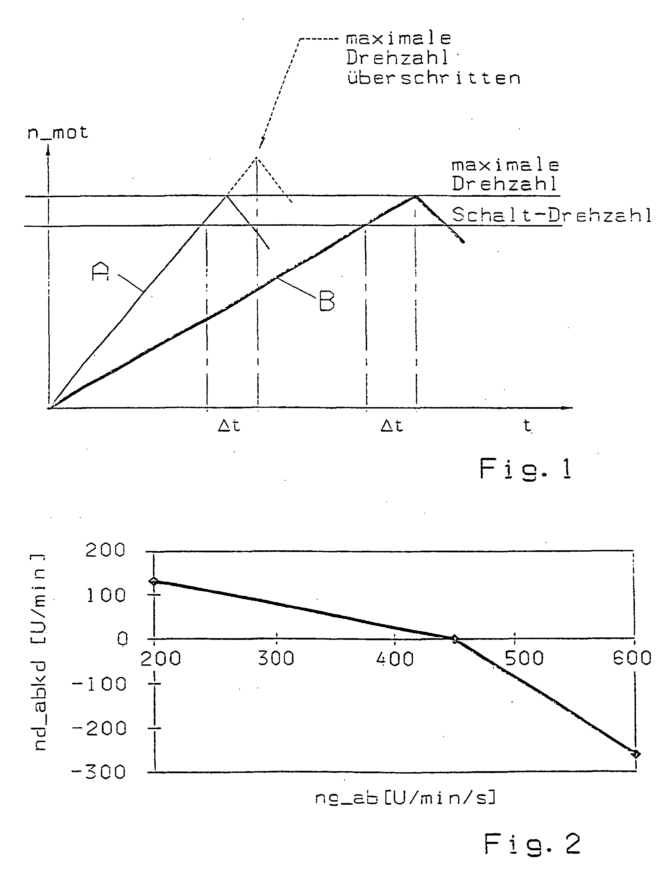

Wie in Fig. 1 illustriert, kann beim Auslösen der Schaltung bei Erreichen einer bestimmten vorgegebenen Schaltdrehzahl, die Verzögerungszeit $\Delta t$ für den Gangwechsel größer sein als die verbleibende Zeit bis zum Erreichen der zulässigen maximalen Motordrehzahl. Dies ist insbesondere bei Bergab-Fahrten der Fall, wobei aufgrund der negativen Fahrbahnneigung das Fahrzeug zusätzlich beschleunigt wird. Dies resultiert in einer Überschreitung der maximalen Drehzahl und wird durch die Kurve A in Fig. 1 verdeutlicht. Eine optimale Kick-down-Hochschaltung wird dahingegen durch die Kurve B verdeutlicht. Hierbei wird bei der maximalen Motordrehzahl geschaltet, ohne jedoch diese zu überschreiten.

Fig. 2 zeigt am Beispiel einer Hochschaltung den erfindungsgemäßen Drehzahloffset in Abhängigkeit vom Abtriebsdrehzahlgradienten ng_ab.

Bei Erkennen eines Kick-down-Zustandes durch die Getriebesteuerung, wird auf den aktuellen Hochschaltpunkt ein vorzeichenbehafteter Drehzahloffset nd_abkd addiert.

Am Beispiel der in Fig. 2 gezeigten Hochschaltung ist der Wert vom Drehzahloffset nd_abkd bei einem bestimmten Abtriebsdrehzahlgradienten ng_ab (hier z. B. 450 1/min 1/sec) gleich Null. Bei höheren Werten für ng_ab (z. B. bei Bergabfahrt) nimmt der Drehzahloffset nd_abkd erfindungsgemäß negative Werte an, d. h. die Schaltung wird bei niedriger Abtriebsdrehzahl ausgelöst. Für den Fall, dass der Abtriebsdrehzahlgradient kleiner ist, als ein vorgegebener Wert, ist der Drehzahloffset nd_abkd positiv, d. h. es wird bei höheren Abtriebsdrehzahlwerten geschaltet.

Der Verlauf des vorzeichenbehafteten Drehzahloffsets wird in Form einer Kennlinie in der Getriebesteuerung abgelegt, wobei für jede Hochschaltung X eine separate Kennlinie KL_ND_ABKDX abgelegt wird:

$$nd\_abkdX = KL\_ND\_ABKDX[ng\_ab]$$

Mittels dieser Vorgehensweise wird der Kick-down-Hochschaltpunkt adaptiv, d. h. in Abhängigkeit von den jeweiligen Belastungszuständen und Fahrbahnneigungen ermittelt, so dass bei einer gewünschten maximalen Motordrehzahl geschaltet wird.

Alternativ wird im Rahmen einer Variante der vorliegenden Erfindung statt eines Drehzahloffsets eine absolute Kick-down-Schaltkennlinie verwendet.

Gemäß einer weiteren Variante der vorliegenden Erfindung werden nach Erkennung eines Kick-down-Zustandes, der Zielgang der nächsten Hochschaltung sowie der Getriebeabtriebsdrehzahlgradient ermittelt.

Anschliessend wird der Drehzahloffset nd_abkd berechnet. Zu diesem Zweck werden die Verzögerungszeiten für die einzelnen Schaltungen applizierbar abgespeichert. Diese Vorgehensweise weist den Vorteil auf, dass temperaturabhängige Verzögerungszeiten bei der Berechnung des Drehzahloffsets nd_abkd berücksichtigt werden, wie durch folgende Gleichung, die beispielhaft eine mögliche Berechnungsvorschrift wiedergibt, verdeutlicht:

nd_abkd = ng_ab*KW_TD_KDX [CGT] mit CGT als Getriebetemperatur und KW_TD_KD als Kennlinie der Verzögerungszeiten für die einzelnen Schaltungen.

Damit ergibt sich für die adaptive Kick-down-Hochschaltdrehzahl für eine bestimmte Hochschaltung X:

$$n\_abkdX = KW\_ND\_ABKDX - nd\_abkd.$$

**Patentansprüche**

1. Verfahren zur Kick-down-Schaltdrehzahloptimierung für ein Kraftfahrzeug mit einem Automatgetriebe, bei dem der Kick-down-Hochschaltpunkt mindestens in Abhängigkeit von den jeweiligen Belastungszuständen bestimmt wird, **dadurch gekennzeichnet, dass** der Kick-down-Hochschaltpunkt auch in Abhängigkeit von Fahrbahnneigungen bestimmt wird.

2. Verfahren nach Anspruch 1, **dadurch gekennzeichnet, dass** bei Erkennen eines Kick-down-Zustandes durch die Getriebesteuerung auf den aktuellen Hochschaltpunkt ein vorzeichenbehafteter Drehzahloffset (nd_abkd) in Abhängigkeit vom Abtriebsdrehzahlgradienten (ng_ab) addiert wird.

3. Verfahren nach Anspruch 2, **dadurch gekennzeichnet, dass** der Verlauf des vorzeichenbehafteten Drehzahloffsets (nd_abkd) in Form einer Kennlinie in der Getriebesteuerung abgelegt wird, wobei für jede Hochschaltung eine separate Kennlinie abgelegt wird.

4. Verfahren nach Anspruch 1, **dadurch gekennzeichnet, dass** zur Bestimmung des Kick-down-Hochschaltpunktes eine absolute Kick-down-Schaltkennlinie verwendet wird.

5. Verfahren nach Anspruch 2, **dadurch gekennzeichnet, dass** nach Erkennung eines Kick-down-Zustandes, der Zielgang der nächsten Hochschaltung sowie der Getriebeabtriebsdrehzahlgradient (ng_ab) ermittelt werden und anschliessend der Drehzahloffset (nd_abkd) und anschliessend der Drehzahloffset (nd_abkd) berechnet wird, wobei die Verzögerungszeiten für die einzelnen Schaltungen applizierbar abgespeichert werden und temperaturabhängige Verzögerungszeiten berücksichtigt werden.

6. Verfahren nach einem der Ansprüche 2 bis 6, **dadurch gekennzeichnet, dass** der Wert vom Drehzahloffset (nd_abkd) ermittelt und anschliessend in Abhängigkeit von der vorliegenden Fahreraktivität neu berechnet wird, derart, dass die Hochschaltdrehzahl (n_abkd) der Fahrweise des Fahrers angepasst wird.

7. Verfahren nach Anspruch 6, **dadurch gekennzeichnet, dass** die Neuberechnung des Wertes vom Drehzahloffset (nd_abkd) in Abhängigkeit von der-Fahreraktivität durch Multiplikation der Kennlinie (nd_abkd) mit einem von der Fahreraktivität abhängigen Faktor erfolgt.

8. Verfahren nach Anspruch 6, **dadurch gekennzeichnet, dass** die Neuberechnung des Wertes vom Drehzahloffset (nd_abkd) in Abhängigkeit von der Fahreraktivität durch Festlegen von Kennlinien für jeden charakteristischen Fahrertyp erfolgt, wobei Zwischenwerte durch Mitteln zwischen den Fahrertypen ermittelt werden.

## Claims

1. Method for optimizing kick-down shifting-speed in a motor vehicle with automatic transmission, with the kick-down upshift point being determined at least subject to the load conditions prevailing, **characterized in that** the kick-down upshift point is also determined subject to the road grade.

2. Method according to claim 1, **characterized in that** upon detection of a kick-down condition by the transmission control unit / TCU, a signed speed offset (nd_abkd) subject to the output speed gradient (ng_ab) is added.

3. Method according to claim 2, **characterized in that** the pattern of the signed rpm offset (nd_abkd) is filed in the TCU as a characteristic line, with a separate characteristic line being filed for every upshift.

4. Method according to claim 1, **characterized in that** an absolute kick-down shifting characteristic is used for the determination of the kick-down upshift point.

5. Method according to claim 2, **characterized in that** upon detection of a kick-down condition, the gear of the next upshift and the transmission output speed gradient (ng_ab) are determined and subsequently the speed offset (nd_abkd) is calculated, with the delay times for the individual shifts being applicably saved and temperature-dependent delay times being considered.

6. Method according to one of the claims 2 to 6, **characterized in that** the value of the speed offset (nd_abkd) is determined and subsequently re-calculated subject to the prevailing action of the driver, in such a way that the upshift speed (n_abkd) is adapted to the driver's style of driving.

7. Method according to claim 6, **characterized in that** re-calculation of the value of the speed offset (nd_abkd) subject to the driver's action is performed by multiplication of the characteristic line (nd_abkd) with a factor subject to the action of the driver.

8. Method according to claim 6, **characterized in that** re-calculation of the value of the speed offset (nd_abkd) subject to the driver's action is performed by defining characteristic lines for every characteristic type of driver, with intermediate values being determined by means of averaging between the types of drivers.

## Revendications

1. Procédé pour l'optimisation de la vitesse de rotation de changement en kick-down pour un véhicule automobile équipé d'une boîte de vitesses automatique, dans lequel le point de montée des vitesses en kick-down est déterminé au moins en fonction des états de charge du moment, **caractérisé en ce que** le point de montée en kick-down est aussi déterminé en fonction des pentes de la chaussée.

2. Procédé selon la revendication 1, **caractérisé en ce que**, lors de la détection d'un état de kick-down, un décalage de vitesse de rotation assorti d'un signe (nd_abkd) est additionné au point de montée actuel par la commande de la boîte de vitesses automatique en fonction du gradient de vitesse de rotation de sortie (ng_ab).

3. Procédé selon la revendication 2, **caractérisé en ce que** le profil du décalage de vitesse de rotation assorti d'un signe (nd_abkd) est enregistré dans la commande de la boîte de vitesses sous la forme d'une caractéristique, une caractéristique séparée étant enregistrée pour chaque changement en montée.

4. Procédé selon la revendication 1, **caractérisé en ce que**, pour la détermination du point de changement en montée en kick-down, on utilise une caractéristique de changement en kick-down absolue.

5. Procédé selon la revendication 2, **caractérisé en ce que**, après la détection d'un état de kick-down, la vitesse cible du prochain changement en montée, ainsi que le gradient de vitesse de rotation de sortie de la boîte de vitesses (ng_ab) sont déterminés et, ensuite, le décalage de vitesse de rotation (nd_abkd), puis le décalage de vitesse de rotation (nd_abkd) sont calculés, les temps de temporisation pour les différents changements étant mémorisés sous forme applicable et des temps de temporisation fonction de la température étant pris en compte.

6. Procédé selon l'une des revendications 2 à 6, **caractérisé en ce que** la valeur du décalage de vitesse de rotation (nd_abkd) est déterminée et ensuite calculée de nouveau en fonction de l'activité actuelle du conducteur, de telle manière que la vitesse de rotation de changement en montée (n_abkd) soit adaptée au mode de conduite du conducteur.

7. Procédé selon la revendication 6, **caractérisé en ce que** le nouveau calcul de la valeur du décalage de vitesse de rotation (nd_abkd) s'effectue en fonction de l'activité du conducteur, par multiplication de la caractéristique (nd_abkd) par un facteur fonction de l'activité du conducteur.

8. Procédé selon la revendication 6, **caractérisé en ce que** le nouveau calcul de la valeur du décalage de vitesse de rotation (nd_abkd) s'effectue en fonction de l'activité du conducteur, par détermination de caractéristiques pour chaque type de conducteur caractéristique, des valeurs intermédiaires étant obtenues par formation de moyennes entre les types de conducteurs.

maximale
Drehzahl
überschritten

n_mot

maximale
Drehzahl

Schalt-Drehzahl

A

B

Δt            Δt            t

Fig. 1

Fig. 2